# EUROPEAN PATENT SPECIFICATION

(11) **EP 0 562 453 B1**
(45) Date of publication and mention of the grant of the patent: **15.05.1996**
(21) Application number: 93104427.5
(22) Date of filing: 18.03.1993
(51) Int. Cl.: B60N 2/44, A47C 7/24

(54) **A seat squab, for example, for motor-vehicle seats**
Sitzkissen, zum Beispiel für Kraftfahrzeugsitze
Coussin de siège, par exemple pour sièges de véhicules automobiles

(30) Priority: 24.03.1992 IT TO920247
(43) Date of publication of application: 29.09.1993
(73) Proprietor: FIAT AUTO S.p.A., I-10135 Torino (IT)
(72) Inventor: Dal Monte, Antonio, I-00196 Roma (IT)
(74) Representative: Bosotti, Luciano

(56) References cited:
- EP-A- 0 363 330
- EP-A- 0 464 007
- EP-A- 0 467 123
- FR-A- 2 003 863
- FR-A- 2 149 792
- GB-A- 1 299 617
- US-A- 3 198 578
- US-A- 4 492 408
- US-A-RE26947 (GETZ)

## Description

The present invention relates in general to the seat portions (briefly, the "squabs") of seats and has been developed with particular attention to its possible application to motor-vehicle seats.

The present Applicant's prior European patent application EP-A-0 464 007 describes a solution for forming squabs of padded material applied to dish-shaped restraints formed on the basis of the profiles of the standard manikins (the so-called SAE manikins) used for type-approval testing. This solution is suitable primarily for forming squabs in which the padding is constituted by foamed material which is shaped so as to form not only the actual seat surface, but also the raised side portions (the so-called "bolsters") for laterally restraining the seat-occupant's thighs. In comparison with conventional solutions, this system enables the use of less padding material, particularly foamed material, since the padding used can be thinner than in conventional seats. The quantity of material used is, in any case, still quite large, particularly because of the need to mould the raised side portions which may be of considerable volume.

Moreover, it has been noted that the stress-damping effect of a mass of foamed material, particularly a mass made of a single, homogeneous material, is optimal only as regards a specific range of stress frequencies whereas, under other conditions which may occur when a vehicle is in motion, the damping effect is found to be reduced.

For this reason, it has already been proposed (see, for example, the present Applicant's European patent application EP-A-0 363 330) to form composite masses of padding, for example, with the use of several layers each having its own damping characteristics, with the aid of a wire mesh insert where appropriate, (in this connection, see, for example, European patent application EP-A-0 467 123, also in the name of the present Applicant). More specifically, the present invention relates to a seat squab having the features called for in the pre-characterising portion of Claim 1, which is known, e.g. from FR-A-2 149 792. Also, GB-A-1 299 617 and US-A-3 198 578, disclosing, respectively, a seat squab with a support pan (instead of a peripheral support frame) and a seat squab including all the features of the pre-characterising portion of Claim 1, except the raised side portions of the restraint, are of interest for the invention.

The object of the present invention is to overcome the limitations of these known prior solutions, particularly as regards the achievement of the following results:
- a reduction in the volume, and hence the amount, of padding material,
- the opportunity for the designer to vary the appearance and style of the squabs, starting with a standard basic structure,
- the facilitation of the fitting of covers,
- the facilitation of the fitting of supplementary systems for moving the seat, particularly in more prestigious cars,
- provision for the easy fitting of effective systems for heating/cooling the squab.

According to the present invention, this object is achieved by virtue of a seat squab having the further characteristics recited in Claim 1.

The invention will now be described, purely by way of non-limiting example, with reference to the appended drawings, in which:
Figure 1 is a schematic, perspective view of a seat, such as a motor-vehicle seat, having a squab formed according to the invention, with some parts of the squab (particularly the padding and the outer cover) removed to facilitate an understanding of the invention, and
Figure 2 is a theoretical, sectional view taken on the line II-II of Fig. 1.

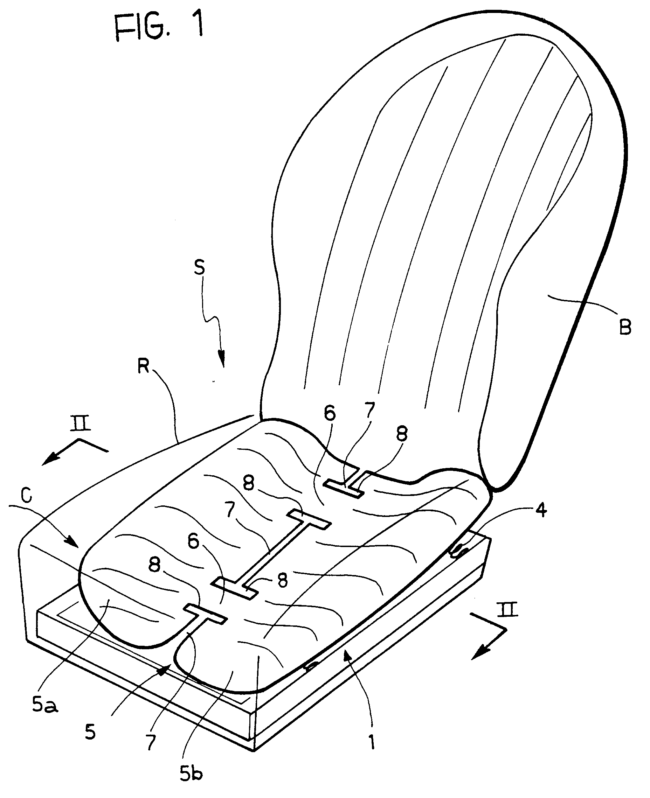

In Figure 1, a seat such as, for example, a motor-vehicle seat (although this is the preferred possible field of use, it should not be considered limiting) is generally indicated S and includes a backrest B and a seat portion C, currently known as a "squab".

The squab C is mounted on a support structure which enables the seat S to be arranged in the passenger compartment of the motor vehicle, possibly in a manner such that the dihedral angle jointly defined by the backrest B and the squab C and/or the fore-and-aft position of the seat, its orientation and inclination, etc. can be varied selectively. This is all in accordance with widely known criteria which do not need to be described herein, particularly since they are not relevant for the purposes of an understanding of the invention.

In general, the squab C has a peripheral framework or frame 1 which is supported on the floor of the passenger compartment of the motor vehicle (not shown) by respective support elements (legs, pivoting arms, etc.), usually with the interposition of sliding guide means for the selective variation of the fore-and-aft position of the seat.

In the embodiment illustrated, the frame 1 of the squab is constituted by a generally square or rectangular frame of rigid material (typically metal).

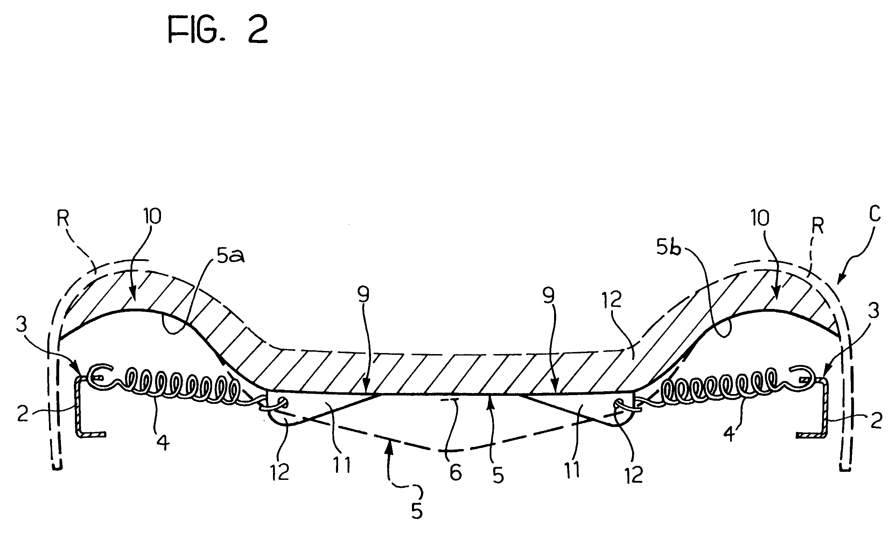

The sectional view of Figure 2 shows the two sides 2 of the frame 1 which are generally C- or channel-shaped and open inwardly of the squab C.

The outer ends (with reference to the general shape of the squab C) of resilient elements such as springs 4 are connected to the sides 2 and to the frame 1 in general, usually by engagement in corresponding holes 3 (Figure 2). The inner ends of the springs 4 support a restraint 5 so that it is suspended in a generally resilient manner within the frame 1. The restraint 5 is constituted by a dished or channel-shaped element of rigid moulded plastics (or an equivalent material) and is constituted essentially by two shaped halves 5a, 5b which are generally specularly symmetrical with respect to the longitudinal median plane of the restraint 5.

The two halves 5a and 5b (which may consist of two portions of a single piece if the restraint 5 is constituted by an integral element, or of two separate elements connected with the interposition of articulation means) form two structures for supporting and restraining the seat-occupant's right and left thighs, respectively.

Preferably, as in the embodiment illustrated, the restraint 5 is constituted by a single piece of moulded plastics material and its two halves 5a, 5b are connected by flexible strips 6 formed on the central longitudinal axis of the restraint 5 during moulding. More precisely, the strips 6 are delimited, and hence defined, by slots 7 which extend along the main longitudinal axis and are connected to further transverse slots 8 in the regions in which the strips or bands 6 are to be formed. The sets of slots 7 and 8 at the front and rear edges of the restraint 5 are thus generally T-shaped and the sets of slots 7 and 8 in the body of the restraint 5 are generally H-shaped; in this connection, it may be noted that the embodiment to which Figure 1 relates has only one H-shaped set of slots; naturally, the number of slots may be varied at will in dependence on the specific requirements of use.

In practice, the strips or bands 6 form a hinge-like articulation having the characteristics of a central joint between the two halves 5a and 5b. This joint enables the vertical profile of the restraint 5 to be varied selectively, as shown schematically in broken outline in Figure 2, for example, as a result of forces applied thereto by the occupant of the seat or as a result of the operation of a positive control member.

In this connection, as regards the variability of its profile, the restraint 5 described in the present application is substantially comparable to the butterfly- or hourglass-shaped back support element described in the present applicant's prior European patent application EP-A-0 420 824.

As can better be seen in the sectional view of Figure 2, in general, each half 5a, 5b has a flat, inner portion 9 for defining the lower plane of the squab C with the homologous portion of the other half, and an outer portion 10 defining a kind of ridge which extends over the springs 4 so as to define one of the raised side portions (the bolsters) of the seat which extend along the sides of the squab C. Naturally, the terms "inner" and "outer" attributed to the two portions 9 and 10 are intended to refer to their relative positions within the restraint 5.

It will also be seen that the undersides of the lower portions 9 have bracket-like ribs 11 which project downwardly and constitute formations for the engagement, usually in respective holes 12, of the inner ends of the springs 4, which are arranged generally symmetrically with respect to the restraint 5. A layer of padding 12 of soft, foamed material (for example, polyurethane), is applied to the upper face of the restraint 5, usually by moulding, and is covered in turn by a cover R of cloth, leather, imitation leather, etc. The thickness of the layer of padding 12 is preferably more or less uniform over the entire restraint 5.

The solution described affords considerable advantages both in relation to its structure and production and as regards the general degree of comfort of the seat.

In the first place, the restraint 5 enables the general shape of the seat including both the central support surface (the inner portions 9) and the raised side portions or bolsters (the outer portions 10) to be formed by the moulding of a rigid material, typically a plastics material. A fairly thin layer of the material constituting the padding 12 can then be co-moulded on the restraint 5. The unit thus formed can then easily be connected to the peripheral frame 1 of the seat by the springs 4 or equivalent resilient elements, the inner ends of which engage the bracket-like ribs 11. The restraint 5 has a central articulation defined by the strips or bands 6 which enable its two halves 5a and 5b to adapt respectively to the right and left buttocks and thighs of the occupant of the seat. This articulation enables optimal adaptation to the width of the body frame and facilitates very good restraint. Moreover, since this means of articulation leaves the front ends of the two halves 5a, 5b free, the occupant's thighs can adopt asymmetrical positions while still being supported from beneath which, in the case of a motor-vehicle driver's seat, enables the pedals to be operated more conveniently. Furthermore, as well as acting as attachments for the springs 4, the ribs or brackets 11 can also act as stiffening structures and, at least to a certain extent, as fins for dissipating the heat produced by the human body and by the padding 12 which is subject to continuous compression and decompression.

The structure described is also easily combined with the various means for moving the seat, possibly with means for achieving a general automatic rocking effect, for enabling good adaptation to various body shapes.

## Claims

1. A seat squab, for example, for motor-vehicle seats, including:
- a peripheral support frame (1),
- a restraint (5) for the buttocks of the occupant of the seat, including a substantially flat, lower, central portion (9) and two raised side portions (10) which extend along the sides of the squab (C) in a generally symmetrical arrangement, and
- resilient means (4) for supporting the restraint (5) within the peripheral frame (1), characterised in that the restraint (5) is constituted by a dish- or channel-shaped element divided into two halves (5a, 5b) which are substantially symmetrical with respect to the longitudinal median plane of the restraint (5) and are articulated centrally by means of strips or bands (6) forming a hinge-like articulation.

2. A squab according to Claim 1 characterised in that the restraint (5) is constituted by a single piece of moulded material.

3. A squab according to any one of the preceding claims, characterised in that the restraint (5) is made of plastics material.

4. A squab according to any one of the preceding claims, characterised in that a mass of padding (12) is applied to the restraint (5).

5. A squab according to Claim 4, characterised in that the thickness of the padding (12) is more or less uniform over the entire restraint (5).

6. A squab according to Claim 4 or Claim 5, characterised in that the padding (12) is co-moulded on the restraint (5).

7. A squab according to any one of the preceding claims, characterised in that the bottom of the restraint (5) has formations (11) for the attachment of the resilient means (4) for supporting it in the peripheral frame (1).

8. A squab according to Claim 7, characterised in that the attachment formations (11) are arranged in a generally symmetrical configuration with respect to the general shape of the restraint (5).

9. A squab according to Claim 7 or Claim 8, characterised in that the attachment formations (11) are in the form of ribs projecting from the lower face of the restraint (5).

10. A squab according to any one of the preceding claims, characterised in that the raised side portions (10) are in the form of ridges which extend over the resilient support means (4).

## Patentansprüche

1. Sitzkissen, beispielsweise für die Sitze in Kraftfahrzeugen, wobei das Sitzkissen aufweist:
- einen Tragrahmen (1),
- eine Begrenzung (5) für das Gesäß der sitzenden Person einschließlich eines im wesentlichen ebenen, unteren Mittelteils (9) und zwei erhöhten Seitenteilen (10), die entlang der Seiten des Kissens (C) in einem im allgemeinen symmetrischen Aufbau verlaufen, und
- eine Federeinrichtung (4), um die Begrenzung (5) innerhalb des Rahmens (1) zu halten,
dadurch gekennzeichnet, daß die Begrenzung (5) von einem teller- oder kanalförmigen Element gebildet wird, das in zwei Hälften (5a, 5b) geteilt ist, die zur Mittelebene in Längsrichtung der Begrenzung (5) im wesentlichen symmetrisch sind und in der Mitte mit Streifen oder Bändern (6) gelenkig verbunden sind, die eine scharnierartige Gelenksverbindung bilden.

2. Kissen gemäß Anspruch 1, dadurch gekennzeichnet, daß die Begrenzung (5) von einem einzigen Stück eines gepreßten Materials gebildet wird.

3. Kissen gemäß irgendeinem der bisherigen Ansprüche, dadurch gekennzeichnet, daß die Begrenzung (5) aus Kunststoff hergestellt wird.

4. Kissen gemäß irgendeinem der bisherigen Ansprüche, dadurch gekennzeichnet, daß eine Masse einer Polsterung (12) auf die Begrenzung (5) aufgebracht wird.

5. Kissen gemäß Anspruch 4, dadurch gekennzeichnet, daß die Dicke der Polsterung (12) über die gesamte Begrenzung (5) mehr oder weniger gleichförmig ist.

6. Kissen gemäß Anspruch 4 oder 5, dadurch gekennzeichnet, daß die Polsterung (12) auf der Begrenzung (5) gleichzeitig gepreßt wird.

7. Kissen gemäß irgendeinem der bisherigen Ansprüche, dadurch gekennzeichnet, daß der Boden der Begrenzung (5) Aufbauten (11) für die Befestigung der Federeinrichtung (4) besitzt, um sie im Rahmen (1) zu halten.

8. Kissen gemäß Anspruch 7, dadurch gekennzeichnet, daß die Befestigungsaufbauten (11) zur allgemeinen Form der Begrenzung (5) im allgemeinen symmetrisch angeordnet sind.

9. Kissen gemäß Anspruch 7 oder 8, dadurch gekennzeichnet, daß die Befestigungsaufbauten (11) die Form von Rippen besitzen, die von der unteren Fläche der Begrenzung (5) vorspringen.

10. Kissen gemäß irgendeinem der bisherigen Ansprüche, dadurch gekennzeichnet, daß die erhöhten Seitenteile (10) die Form von Wülsten besitzen, die über den Federeinrichtungen (4) verlaufen.

## Revendications

1. Coussin d'assise, par exemple pour sièges de véhicules à moteur, comprenant :
- un cadre support périphérique (1),
- une retenue (5) pour le postérieur de l'occupant du siège, comprenant une partie centrale inférieure (9) sensiblement plate, et deux parties latérales redressées (10) qui s'étendent le long des côtés du coussin (C) dans une disposition sensiblement symétrique, et
- des moyens élastiques (4) destinés à donner appui à la retenue (5) dans le cadre périphérique (1), caractérisé en ce que la retenue (5) est constituée par un élément en forme de cuvette ou de U, divisé en deux moitiés (5a, 5b) qui sont sensiblement symétriques par rapport au plan médian longitudinal de la retenue (5) et sont articulées au centre au moyen de languettes ou bandes (6) formant une articulation analogue à une charnière.

2. Coussin selon la revendication 1, caractérisé en ce que la retenue (5) est constituée par une unique pièce de matière moulée.

3. Coussin selon une quelconque des revendications précédentes, caractérisé en ce que la retenue (5) est faite de matière plastique.

4. Coussin selon une quelconque des revendications précédentes, caractérisé en ce qu'une masse de rembourrage (12) est appliquée à la retenue (5).

5. Coussin selon la revendication 4, caractérisé en ce que l'épaisseur du rembourrage (12) est plus ou moins uniforme sur toute la retenue (5).

6. Coussin selon la revendication 4 ou la revendication 5, caractérisé en ce que le rembourrage (12) est co-moulé sur la retenue (5).

7. Coussin selon une quelconque des revendications précédentes, caractérisé en ce que la partie inférieure de la retenue (5) présente des formations (11) servant pour la fixation des moyens élastiques (4) servant à lui donner appui dans le cadre périphérique (1).

8. Coussin selon la revendication 7, caractérisé en ce que les formations de fixation (11) sont disposées dans une configuration sensiblement symétrique par rapport à la forme générale de la retenue (5).

9. Coussin selon la revendication 7 ou la revendication 8, caractérisé en ce que les formations de fixation (11) se présentent sous la forme de nervures qui font saillie sur la face inférieure de la retenue (5).

10. Coussin selon une quelconque des revendications précédentes, caractérisé en ce que les parties latérales redressées (10) se présentent sous la forme de côtes qui s'étendent au-dessus de l'élément support élastique (4).
